# EUROPEAN PATENT APPLICATION

(11) **EP 1 168 282 A1**
(43) Date of publication of application: **02.01.2002**
(21) Application number: 00202130.1
(22) Date of filing: 20.06.2000
(51) Int. Cl.: G09F 3/04, G09F 3/10, C09J 7/04

(54) **Label for affixing to a garment**

(71) Applicant: 3M Innovative Properties Company, St. Paul, Minnesota 55133-3427 (US)
(72) Inventor: Suire, Delphine, c/o 3M Europe s.a., 1831 Diegem (BE); Congard, Pierre, c/o 3M Europe s.a., 1831 Diegem (BE)
(74) Representative: Voortmans, Gilbert J.L.

(57) **Abstract**

The present invention provides a label suitable for affixing to a garment, said label (24) comprising in the order given a backing layer (16), a first adhesive layer (18) comprising a heat activatable adhesive and a second adhesive layer (28) comprising an elastomeric microsphere adhesive. Further provided are a method for applying the label to garment and a method for making the label.

## Description

### 1. Field of the invention

The present invention relates to a label for affixing to a garment. The invention further relates to a method for producing the label and to a method for bonding the label to a garment. In a preferred mode of the invention, the invention relates to a label that is retroreflective.

### 2. Background of the invention

A substantial market has developed in which labels such as alphanumeric characters and other indicia, are applied to garments. For example, on uniforms characters and other indicia may be applied. Also, for improving safety and visibility, retroreflective labels may be applied to a garment.

The labels generally comprise a backing layer and a hot melt adhesive. The label material may be formed by die-cutting the individual characters. The user positions the characters on the garment with the hot melt adhesive side against the garment and then applies heat and pressure to the characters. Typically, such labels with a hot melt adhesive are not tacky at ambient temperature and therefore do not adhere to the garment thus allowing easy repositioning of the label prior to being bonded to the garment. A permanent bond between the label and the garment is created when the adhesive is activated by heating the label. At elevated temperature, the hot melt adhesive melts or softens and becomes tacky so that a bond is created between the label and the garment which bond remains and becomes permanent upon cooling.

Users of labels of this type have encountered a problem in accurately maintaining the positions of the characters between the time they are located on the garments and the subsequent application of heat and pressure to bond them in place. This is especially true when all of the characters are positioned on the garment and then sealed thereto in a single subsequent operation, as is desirable for efficient operation. Desirably, the label is placed on the garment at one station and the garment is then moved to another station, where an ironing device applies heat and pressure simultaneously to the label(s).

To solve this problem, it has been proposed in US 4,717,621 to apply a pressure sensitive adhesive layer on the hot melt adhesive layer. The pressure sensitive adhesive thus holding the labels temporarily in place while the labels are permanently bonded to the garment using heat and pressure. This method however has the disadvantage that after some time of being in contact with the garment, the labels cannot be easily repositioned because over time a stronger bond is formed between the label's pressure sensitive adhesive layer and the garment. Accordingly, if a user tries to reposition the label after it has been in contact with the garment for some time before permanent attachment, damage to the garment or label may be caused. The latter is particularly true in case the label material has a retroreflective backing layer which may be easily damaged when the bonding strength between garment and label increases over time.

NL 1003476 describes similar labels as disclosed in US 4,717,621. Like in US 4, 717,621, the labels of the Dutch patent include a backing layer, a hot melt adhesive layer and a pressure sensitive adhesive layer. The backing layer in the Dutch patent is itself a fabric. The Dutch patent teaches that upon application of heat to such a label while in contact with a garment, the hot melt adhesive layer melts and the pressure sensitive adhesive layer penetrates through the backing layer. The pressure sensitive adhesive layer may thereafter be removed from the backing by washing. This method however has the disadvantage that machinery used to bond the labels to the garment becomes contaminated with adhesive and which may thus also cause soiling of the garment.

Pressure sensitive hot melt adhesive systems have also been described. For example, in US 4,049,483 and US 4,166,152 there is taught a hot melt adhesive layer that also includes tacky elastomeric microspheres. Accordingly, such a system has pressure sensitive adhesive properties at ambient temperature allowing repositionability while at elevated temperature a permanent bond is formed. The bond strength resulting from this system may however not stand up sufficiently to laundering and dry cleaning operations, which greatly detracts from their use on many garments, particularly those used as safety apparel.

Accordingly, a need still exists to provide an adhesive system by which labels can be affixed to garments using a heat activatable adhesive to create a permanent bond between the label and the garment while providing a solution to the aforementioned problem of accurate positioning. Desirable, the adhesive system will allow for the label to remain repositionable prior to permanent bonding to the garment, even if the label has been in contact with the garment over a prolonged time. Also, the adhesive system should not substantially contaminate equipment to bond the labels to the garment. Finally, the permanent bond created between the garment and the label should preferably be capable of withstanding numerous washing operations of the garment.

### 3. Summary of the invention

According to the present invention, there is provided a label suitable for affixing to a garment, said label comprising in the order given a backing layer, a first adhesive layer comprising a heat activatable adhesive and a second adhesive layer comprising an elastomeric microsphere adhesive. The term "in the order given" as used herein does not exclude the possibility that other layers may be present between the recited layers such as for example a primer layer between the backing layer and first adhesive layer.

The labels of the present invention allow for easy repositionability prior to permanent bonding, yet accurate positioning of the labels is easily achieved as well. Additionally, the labels can be easily repositioned even if they have been left in contact with the garment for a prolonged time prior to permanent bonding of the label to the garment. Also, the preferred labels when permanently bonded to the garment generally do not detach when the garment is being washed, even after frequent washing cycles (e.g. 5 or more washing cycles, preferably 10 or more) of the garment.

According to a further aspect of the present invention there is provided a method for applying the labels as set forth above to a garment comprising the steps of:
- providing a label as described above;
- positioning the label on a garment by adhering said label to the garment by the second adhesive layer; and
- heating the label while adhered to the garment so as to activate the heat activatable adhesive of the first adhesive layer and creating permanent adherence of the label to the garment.

Still further, the present invention provides a method for manufacturing the labels according to the present invention.

### 4. Brief description of the drawings

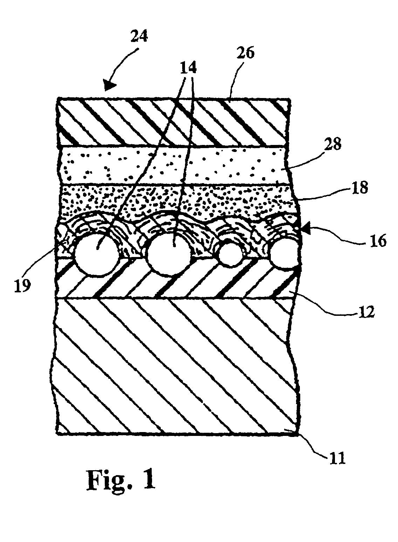

For the purpose of a better understanding of the present invention and without intending to limit the invention thereto, reference will be made to figure 1, showing a schematic drawing of a cross-section of label material according to a preferred embodiment.

### 5. Detailed description of the invention

The backing layer of the label of the present invention will generally be a plastic layer. For example, the backing layer can comprise a polyolefin such as polyethylene or polypropylene or a layer of polyester. The backing layer will preferably be sufficiently flexible so that the label may easily conform with the garment when worn by a user. Typically, the backing layer will have a thickness between 10µm and 1000µm, preferably between 40µm and 120µm. The backing layer may be coloured by including therein a dye or a dye pigment. Alternatively, the side of the backing layer opposite to the side that carries the first and second adhesive layer may be coated with a coating composition including a dye or a dye pigment. Still further, the backing layer may be printed with a desired design.

The heat activatable adhesive comprised in the first adhesive layer of the label is generally an adhesive that is non-tacky at room temperature (25°C) and that upon heating is capable of bonding the label to a garment such that upon cooling the label is permanently bonded to the garment. By "permanently bonded" is meant that the label cannot be separated from the garment without creating damage to the label or the garment. Generally, the heat activatable adhesive will comprise a thermoplastic polymer that upon heating softens and/or melts allowing for the first adhesive layer to become tacky and bond to the garment. Suitable thermoplastic materials include, for example, polyesters, ethylene vinyl acetate (EVA), polyurethanes, polyamides, polyolefins, and derivatives and mixtures thereof. For example, the heat activatable adhesive may be a high molecular weight thermoplastic polyurethane made from an aromatic diisocyanate and a polyester. Further examples of heat activatable adhesives include:
(a) solution grade vinyl adhesive (such as VAGH, VMCH or vYHH from Union Carbide Corp. or polyvinyl acetate/polyvinyl chloride copolymers);
(b) the vinyl adhesives of (a) above in combination with a plasticizer (such as dioctylphthalate, dibutylphthalate and t-cresylphosphate) to achieve flexibility and elasticity;
(c) thermoplastic polyester and polyether urethane elastomers (such as Estane™ polyurethane resin from B. F. Goodrich Chemical Co.);
(d) films of linear, saturated polyester resins, such as Yitel™ PE55Y5 from Goodyear Tire & Rubber Co.;
(e) combinations of (a) or (b) with (c) above.

The first adhesive layer may contain further adjuvants such as those commonly employed by one skilled in the art. For example, the first adhesive layer may include organic and/or inorganic pigments, dyes, including fluorescent dyes, stabilisers or plasticizers. In accordance with a particular embodiment, the backing layer may be selected as a transparent layer and the adhesive layer may then be pigmented and/or dyed to give an attractive appearance to the label. The dry coating weight of the first adhesive layer will generally be between 20g/m² and 60g/m², preferably between 25g/m² and 40g/m².

The second adhesive layer of the label comprises an elastomeric microsphere adhesive. Particularly suitable elastomeric microsphere adhesives for use in this invention are disclosed in US 3,691,140 and US 4,166,152. The microsphere adhesives described in these patents are infusible, organic solvent-dispersible, organic solvent-insoluble, inherently tacky and elastomeric homo- or copolymer microspheres. The microspheres will typically have a diameter in the range of 1 to 250µm, preferably between 5 and 150µm. The microspheres are insoluble in organic solvent and are dispersible in common organic solvents except highly polar organic solvents such as methanol and ethanol. Typically, the microspheres will be dispersible in organic solvents such as for example ethyl acetate, tetrahydrofuran, heptane, 2-butanone, benzene, cyclohexane esters, isopropanol and higher alcohols. The microspheres are generally produced via an aqueous suspension polymerization utilising an emulsifier in an amount greater than the critical micelle concentration.

Following polymerization, the aqueous suspension of copolymer microspheres is stable to agglomeration or coagulation under room temperature conditions. The copolymer suspensions may have non-volatile solids contents from about 10 to about 50 percent by weight. Upon prolonged standing, the suspensions will separate into two phases, the lower phase being aqueous and substantially free of polymer, the upper phase being an aqueous dispersion of polymer spheres. Decantation of the upper phase provides a low viscosity aqueous suspension having a non-volatile solids content on the order of about 75 percent which, if shaken with water, will readily redisperse.

If desired, the aqueous dispersion of microspheres may be utilized immediately following polymerization to provide the second adhesive layer. However, it has been found that application of the elastomeric microsphere adhesive from an aqueous dispersion has a negative impact on the washability properties of a garment having such a label adhered to it. In particular, it was found that frequent washing of the garment may result in the label being detached from the garment. It is not fully clear as to what the reason for this finding is but it is believed that this may be due to the large amount of surfactant that is present in the aqueous dispersion of the microspheres. Accordingly, it is perferred that the aqueous dispersion of microspheres is coagulated with methanol, saturated salt solutions, or the like, followed by washing and drying. These dried polymers spheres, with sufficient agitation, will readily suspend in the previously mentioned wide variety of common organic solvents. Once the polymer is dried however, it is not redispersible in water. When the elastomeric microsphere adhesive is applied as a dispersion in an organic solvent, the garment having adhered to it the label, can be frequently washed without risk of detachment of the label during the washing operation.

The microsphere adhesive disclosed in US 3,691,140 comprises copolymer microspheres that comprise 90 % to 99.5% by weight of at least one alkyl acrylate ester and 10 to 0.5% by weight of at least one monomer that is selected from the group consisting of substantially oil-insoluble, water-soluble, ionic monomers and maleic anhydride. The alkyl acrylate ester portion of the microspheres generally comprises those alkyl acrylate monomers which are oleophilic, water-emulsifiable, of restricted water-solubility, and which, as homopolymers, generally have glass transition temperatures below -20°C. Examples of alkyl acrylate ester monomers that can be used include iso-octyl acrylate, 4-methyl-2-pentyl acrylate, 2-methylbutyl acrylate, sec-butyl acrylate, and the like. Acrylate monomers with glass transition temperatures higher than -20°C. (i.e. tert-butyl acrylate, iso-bornyl acrylate or the like) may be used in conjunction with one of the above described acrylate ester monomers as long as the resultant polymer has glass transition temperature less than -20°C. Additionally, the tacky nature of the microspheres can be varied by inclusion of a minor portion of a non-acrylate or methacrylate ester comonomer which is non-ionic and water insoluble, such as divinyl benzene and N-t-octylacrylamide.

The water-soluble ionic monomer portion of the microspheres is comprised of those monomers which are substantially insoluble in oil. By substantially oil-in-soluble and water-soluble it is meant that the monomer has a solubility of less than 0.5% by weight and, a distribution ratio at a given temperature (preferably 50° to 65°C.), of solubility in the oil phase monomer to solubility in the aqueous phase of less than 0.005.

Ionic monomers conforming to the preceding criteria include sodium methacrylate, ammonium acrylate, sodium acrylate, (I) trimethylamine p-vinyl benzimide, (II) 4,4,9-trimethyl-4-azonia-7-oxo-8-oxa-dec-9-ene-1-sulphonate, (III) N,N-dimethyl-N-(β-methacryloxy-ethyl) ammonium propionate betaine, (IV) trimethylamine methacrylimide, (V) 1,1-dimethyl-1(2,3-dihydroxypropyl)aminemethacrylimide; any zwitterionic monomer having the preceding solubility requirements, and the like.

The microsphere adhesive disclosed in US 4,166,152 is based on microspheres that may consist of a homopolymer of an alkyl acrylate and that do not require the presence of an ionic comonomer as set forth above. To obtain these microspheres, US 4,166,152 teaches the suspension polymerization of an alkyl acrylate or alkyl methacrylate ester using an emulsifier in an amount greater than the critical micelle concentration in combination with an ionic suspension stabilizer.

Thus, according to a preferred embodiment of the invention, the microspheres of the elastomeric microsphere adhesive comprises microspheres of a homopolymer or copolymer of at least one alkyl acrylate ester or alkyl methacrylate ester, the homopolymer of which has a Tg of less than -20°C.

The dry coating thickness of the second adhesive layer comprising the elastomeric microsphere adhesive is preferably between 10µm and 40µm, more preferably between 10µm and 25µm. When the coating thickness of the second adhesive layer becomes too low, the label will not stick enough to the garment to keep it in place until permanent bonding by heat activating the heat activatable adhesive. On the other hand, increasing the thickness of the second adhesive layer beyond what is necessary for keeping the label in place, will be uneconomical and may result in the label being no longer repositionable when left on the garment for some time. The optimal thickness of the second adhesive layer can be easily determined by routine experimentation and will generally depend on the particular nature and composition of the second adhesive layer. The second adhesive layer is preferably substantially free of surfactants, i.e. the second adhesive layer preferably is free of surfactants or contains surfactants in an amount no greater than 1 part per 100 parts by weight of microspheres, preferably in an amount less than 0.1 part per 100 parts by weight of microspheres.

In a particularly preferred embodiment, the label of the present invention will be retroreflective. In accordance with one embodiment in connection with the present invention, the label can be made retroreflective by providing the backing layer as a light reflective layer or according to an alternative embodiment, the label can be provided with light reflective properties by providing a light reflective coating on the backing layer. A light reflective coating, as a backing layer or separate coating on a backing layer, may comprise a binder having partially embedded therein a firmly but resiliently bonded surface layer of small, transparent, convex lens elements such as glass beads or microspheres, preferably having a refractive index of 1.7 to 1.9 and a diameter of less than 250 µm, typically 40 to 150 µm. The binder is typically a rubbery polymer such as butadiene-acrylonitrile copolymer containing a reflective pigment such as aluminum flakes as well as resin and a plasticizer. Instead of loading the binder with aluminum flakes, an aluminium coating (or similar reflective material) may be placed on the backs of or behind the glass beads or microspheres. These reflective coatings are described in for example US 2,567,233 and US 3,172,942. The light reflective coating may be further protected with a removable protective layer that covers exposed portions of the glass microspheres such as for example a polyethylene coated paper. Once applied to the garment or prior to application of the label to the garment, the protective layer is removed.

Figure 1 illustrates schematically a cross-section of a retroreflective label material 24. As shown in figure 1, backing layer 16 comprises glass beads 14 embedded in a binder material. Backing layer 16 further comprises nacreous pigment 19. The glass beads of the backing layer are protected by sheet material 11 coated with a thermoplastic coating 12. The protective sheet material together with layer 12 will be removed prior or after application of the label. Retroreflective label 24 further includes first adhesive layer 18 comprising a heat activatable adhesive and second adhesive layer 28 comprising the elastomeric microsphere adhesive. The second adhesive layer 28 is protected with a release liner 26.

Reflectivity of the labels may also be obtained by providing the backing layer as, or on the backing layer, a series of transparent dielectrics (i.e. dielectric reflectors), each having a thickness which is an odd numbered multiple of about one-fourth of the wavelength of light in the wavelength range of about 3,800 to 10,000 angstroms, as described in U.S. Pat. No. 3,700,305. The refractive index of each transparent dielectric layer is typically at least 0.1 (preferably at least 0.3) higher or lower than that of the adjacent layers. Still further reflective materials that can be used as the backing layer include for example the multi-layer materials described in e.g. US 5,882,774 and WO 99/36258.

Besides the exposed lens variety (i.e. glass beads exposed to air) described above to provide a retroreflective label, enclosed lens types having a transparent layer covering the outer surface of the glass beads may be employed as well as encapsulated lens type labels having a transparent polymeric layer over the front of the glass microspheres and bonded in such a way as to result in air cells in front of the microspheres. Enclosed lens type of materials have been disclosed in for example US 4,025,159 and US 3,190,178. Still further, the labels may be provided with retroreflectivity through the use of tetrahedra or other prismatic corner shapes as the lens elements in or on the backing layer instead of glass microspheres. Such type of retroreflective material is for example described in US 5,861,211. Thus, in accordance with this embodiment, the retroreflectivity of the label may be provided by providing a transparent layer that has a substantially flat first surface and opposite thereto a structured second surface bearing utilitarian structures, e.g. cube corner elements which are preferably covered with a sealing layer. In practical embodiments, the structured second surface comprises a plurality of grooves defining a plurality of peaks (in cube-corner sheeting at least two or three grooves intersect, whereas in prism films the grooves are parallel), a sealing film layer (colored or colorless) disposed in and bonded to a first portion of the grooves, a second portion of the grooves precluded from contact with the sealing film layer, and the first and second adhesive layers disposed on the sealing film layer optionally through the intermediary of one or more primer layers. As used herein the term "peak" means a projection having at least two planar facets, such as prisms, pyramidal protrusions, cube-comer protrusions, and the like.

Particularly suitable retroreflective materials for making retroreflective labels in connection with the present invention are available from 3M Company under the brandname SCOTCHLITE™.

The labels of the present invention may contain additional layers such as primers and protective coatings. According to a particularly preferred embodiment, the labels according to the invention comprise a removable protective layer, sometimes referred to in the art as release layer, that covers and protects the second adhesive layer prior to use and application of the label on a garment.

The labels of the present invention can be manufactured by applying to a backing layer in the order given the first adhesive layer and the second adhesive layer. Application of the first and second adhesive layer may be carried out by any of the well-known coating techniques. For example, the first adhesive layer can be applied from a solvent coating solution or preferably, the first adhesive layer is hot melt coated or extruded on the backing layer. Coating techniques that can be employed to apply the second adhesive layer include meyer bar coating, knife coating, notched bar coating and spraying. As mentioned above, the second adhesive layer is preferably applied from a dispersion of the microspheres in an organic solvent. Alternatively, the first and second adhesive may be applied through lamination. However, coating is the preferred application method.

To apply a label in connection with the present invention to a garment, the label is adhered to garment and positioned at its desired location. Positioning and repositioning can be easily performed because of the use of the second adhesive layer comprising the elastomeric microsphere adhesive. Subsequent thereto, the label is heated to activate, i.e. melt or soften, the heat activatable adhesive of the first adhesive layer. Generally, some pressure will be applied simultaneously during the heating step. The required temperature to activate the adhesive will depend on the nature of the heat activatable adhesive layer and should be selected so as to avoid damage to the garment. Generally, the heating temperature used for applying the label to the garment will be between 100 and 180°C, more preferably between 120°C and 150°C.

The nature and type of garment to which the labels of the present invention can be applied is not particularly limited and includes garments based on natural fibers as well as garments based on synthetic fibers and garments based on mixed natural and synthetic fibers. For example, the garment may be based on cotton fibers, polyester fibers, polyamide fibers as well as mixture of these such as for example a garment of cotton and polyester. The garments may be woven, knitted as well as non-woven webs. The garment may further be coated with a polymer coating such as e.g. a polyvinyl chloride coating or a polyurethane coating.

The following examples further illustrate the invention without however the intention to limit the invention thereto.

### Test Methods

### Initial Adhesion

A strip of adhesive-coated reflective material (described in the examples below) having the dimensions of 50.8 mm x 100 mm was placed on the surface of a garment consisting of a polyester knit garment coated on one side with a layer of polyurethane. This substrate is commercially available as FLEXOTHANE™ # 170 (fluorescent yellow) from Sioen Garments S. A., Mouscron, Belgium (a division of Sioen Industries S. A., Ardooie, Belgium. The strips of reflective material were rolled down onto the substrate two times using a 5 kg rubber-coated roller.

The garment bearing the reflective material was grasped and shaken vigorously to determine whether the reflective material would remain adhered to the garment during in-process manipulation of garments. If the reflective material remained adhered to the garment, it was given a grade of PASS. If the reflective material fell from the garment, it was given a grade of FAIL.

### Initial Removability

Strips of reflective material (as described below in the examples) were bonded to the garment as described above under Initial Adhesion. Materials which passed the Initial Adhesion test were then assessed for their degree of removability. The samples were graded as PASS if they were removable with no adhesive residue and no damage to the garment after a period of twenty minutes. Samples of reflective material which could not be removed from the garment were rated as FAIL.

The test was repeated after the reflective material was allowed to remain on the substrate for a period of three days. If the reflective material could be removed from the substrate without damage or residue it was given a grade of PASS. If the reflective material could not be removed, damaged the garment on removal or left adhesive residue, it was given a grade of FAIL.

### Durability of Adhesive Bond on Washing

Strips of reflective material (as described below in the examples) having the dimensions of 50.8 cm x 100 cm were bonded with heat and pressure to the polyurethane surface of a 1 m² section of a polyurethane-coated polyester garment available as FLEXOTHANE™ # 170 (fluorescent green) from Scion Garments S. A., Mouscon, Belgium (a division of Scion Industries S. A., Ardooie, Belgium).

The bond was made by placing the reflective material on the polyurethane-coated side of the garment and pressing the reflective material onto the garment using a platten press (available as Model TM50 from Schroeter GmbH, Dortmund, Germany) held at a temperature of 140 ° C for 15 sec with a pressure of setting of 10 on the pressure scale of 1 to 10 indicated on the press (corresponds to ca. 150 KPa).

The garment bearing the adhesively-bonded reflective material was then subjected to a standard home washing test (twenty-five complete washing cycles) as described in ISO 6330, Part 2a at 60° C. The garment bearing the reflective material was then inspected visually to determine whether the reflective stripe had separated from the garment surface as a result of washing.

### Example 1

A retroreflective material bearing a heat-activatable adhesive (commercially available as 3M™ SCOTCHLITE™ Reflective Material, 8710 Silver Transfer Film available from Minnesota Mining and Manufacturing Company, St. Paul, Minnesota, USA) was obtained from the manufacturer. The protective polyethylene film which covered the heat-activated adhesive layer of the product was removed.

A layer of water-based, microsphere pressure-sensitive adhesive (available as SCOTCH™ - GRIP™ MSA 1048 Industrial Repositionable Water Based Adhesive from Minnesota Mining and Manufacturing Company, St. Paul, MN, USA) having a solids content of 40% was coated uniformly onto the surface of the reflective material bearing the heat-activated adhesive layer. A coating weight of about 100 microns wet thickness was applied using a notched bar. The resulting reflective material was dried in a forced air oven at 110° C for two minutes. The dry coating weight of the layer of microsphere adhesive was ca. 100 microns.

The reflective material was then tested for initial adhesion and initial removability as described under Test Methods above. An initial weak adhesive bond had formed, but it could be broken easily. The reflective material could be removed from the garment without leaving adhesive residue and could be repositioned readily.

Finally, the adhesive-coated reflective material was firmly and irreversibly bonded to the garment using heat and pressure as described under Test Methods above.
After final bonding, the protective film layer on the front reflective surface of the reflective material was removed by peeling it off. Visual appearance of the bonded reflective material was excellent. The edges of the reflective material were firmly bonded and the presence of the additional adhesive did not influence the appearance of the uniformly bonded reflective material as compared to the reflective material of Comparative Example 1.

Sections of garment bearing the bonded reflective material were then laundered as described under Test Methods and then re-examined visually to determine whether the bond was still intact. Attempts were made to lift the edges of the reflective material, but it was still firmly bonded to the substrate after washing.

Test results are summarized in Table 1.

### Example 2-5

A microsphere pressure-sensitive adhesive dispersed in a solvent such as described in US 3,691,140 (Silver) and US 4,166,152 (Baker & Ketola) was coated on the heat-activated adhesive-bearing surface of 3M ™ SCOTCHLITE™ Reflective Material - 8710 Silver Transfer Film available from Minnesota Mining and Manufacturing Company, St. Paul, Minnesota, USA) and dried in a forced air oven at 120° for two minutes to give materials with different dry adhesive thicknesses respectively .

Each reflective material was evaluated for initial adhesion, removability and washability as described under Test Methods above. Test results are shown in Table 1.

### Comparative Examples C1 and C2

The surface of the reflective material bearing the heat-activated adhesive, as described in Example 1, was coated with two thicknesses, respectively, of a solvent-borne acrylic pressure-sensitive adhesive (available as AEROSET™ 1450-Z-4, 40 % solids in a mixture of ethanol, ethyl acetate, heptane and isopropanol in a weight ratio of 48 / 32 / 19.5 / 0.5 from Ashland Chemical Company, Columbus, Ohio, USA) using a knife-coater. The adhesive layer thus applied was dried in a forced air oven at 120 °C for ten minutes.

Reflective materials bearing dry adhesive thicknesses of 100 microns and 20 microns, respectively, were evaluated.

Materials were evaluated for initial adhesion and removability. Reflective materials of Examples C1-C2 were then bonded to garments using heat and pressure as described in Example 1 and then washed according to the method given above under Test Methods. Test results are summarized in Table 1.

**Table 1**

| Ex. | PSA type | PSA dry thickness, µm | Initial Adhesion | Removability (20 min, 3 days) | Durability on washing |
|---|---|---|---|---|---|
| 1 | Water-based microspheres | 100 | PASS | PASS, PASS | FAIL* |
| 2 | Solvent-dispersed microspheres | 10 | PASS | PASS, PASS | PASS |
| 3 | " | 12.5 | PASS | PASS, PASS | PASS |
| 4 | " | 20 | PASS | PASS, PASS | PASS |
| 5 | " | 25 | PASS | PASS, PASS | PASS |
| C1 | Solvent-borne PSA | 100 | PASS | FAIL , FAIL | PASS* |
| C2 | " | 20 | PASS | PASS, FAIL | FAIL (easy edge lift) |

| | | | | | |
|---|---|---|---|---|---|
| * test performed on an alternate substrate, a polyester cotton blend (65% / 35%) having a weight of 215 g/m², commerically available as GNEIS™ (Color Irish Green) 50167/2 from Lauffenmuehle Textil GmbH, Lauchringen, Germany. | | | | | |

## Claims

1. A label suitable for affixing to a garment, said label comprising in the order given a backing layer (16), a first adhesive layer (18) comprising a heat activatable adhesive and a second adhesive layer (28) comprising an elastomeric microsphere adhesive.

2. A label according to claim 1 wherein said second adhesive layer is provided directly on said first adhesive layer.

3. A label according to claim 1 or 2 wherein said backing layer has a first and second major side, said first major side being retroreflective and said second major side carrying said first and second adhesive layers.

4. A label according to any of claims 1 to 3 wherein said first adhesive layer is non-tacky at temperatures less than 25°C and wherein said first adhesive layer is capable of permanently bonding said backing layer to a garment when heated to a temperature between 100°C and 180°C

5. A label according to any of the previous claims wherein said backing layer has a first and second major side, said first major side carrying a removable protective layer (11,12) and said second major side carrying said first and second adhesive layers.

6. A label according to any of the previous claims further comprising a removable layer (26) protecting said second adhesive layer.

7. A label according to any of the previous claims wherein the thickness of said second adhesive layer is between 10µm and 40µm.

8. A method of producing a label according to any of claims 1 to 7 comprising in the steps of:
- providing a backing layer;
- applying a first adhesive layer comprising a heat activatable adhesive to said backing layer; and
- applying a second adhesive layer comprising an elastomeric microsphere adhesive on said first adhesive layer.

9. A method according to claim 8 wherein said second adhesive layer is applied by coating a dispersion of elastomeric microspheres in an organic solvent on said first adhesive layer.

10. A method for applying a label to a garment comprising the steps of:
- providing a label as defined in any of claims 1 to 7;
- positioning said label on said garment by adhering said label to said garment by said second adhesive layer; and
- heating said label while adhered to said garment so as to activate said heat activatable adhesive of said first adhesive layer and creating permanent adherence of said label to said garment.
